# EUROPEAN PATENT APPLICATION

(11) **EP 1 845 066 A1**
(43) Date of publication of application: **17.10.2007**
(21) Application number: 05809198.4
(22) Date of filing: 24.11.2005
(51) Int. Cl.: C02F 11/14, C02F 1/54

(54) **METHOD FOR COAGULATING AND DEWATERING SLUDGE WITH USE OF POLYMER COAGULANT AND METHOD FOR COAGULATING AND PRECIPITATING WASTE WATER WITH USE OF POLYMER COAGULANT**

(30) Priority: 25.11.2004 JP 2004340162
(71) Applicant: Dia-Nitrix Co., Ltd., Tokyo 104-0031 (JP)
(72) Inventor: Taki, Masaru, c/o Dia-Nitrix Co., Ltd., Yokohama-shi, Kanagawa 2300053 (JP); Komido, Toshiaki, c/oToyama Plants Dia-Nitrix Co.,Ltd, Toyama-shi,Toyama 931-8601 (JP); Onishi, Hideaki, c/o Dia-Nitrix Co., Ltd., Yokohama-shi, Kanagawa 2300053 (JP); Matsushita, Masao, Nagano-shi, Nagano 3812246 (JP)
(74) Representative: HOFFMANN EITLE
(86) International application number: PCT/JP2005/021557
(87) International publication number: WO 2006/057285

(57) **Abstract**

Using a continuous dissolving and feeding device 1 equipped with two or more storage tanks 2 and 3 for storing two or more kinds of powdery polymer coagulants individually, feeders 4 and 5 which are able to control feed rate, connected to the storage tanks 2 and 3, a mixing tank 6 equipped with a feed water pump, and a filtering member 8, the powdery polymer coagulants stored in the storage tanks 2 and 3 are fed to the mixing tank 6 via the feeders 4 and 5; a dispersing solution is prepared by mixing the powdery polymer coagulants with water in the mixing tank 6; the dispersing solution is passed through the filtering member 8 to prepare an aqueous coagulant solution; and the aqueous coagulant solution is added to sludge or waste water.

## Description

### TECHNICAL FIELD

The present invention relates to a method for coagulating and dewatering sludge using a polymer coagulant and a method for coagulating and precipitating waste water using a polymer coagulant.
Priority is claimed on Japanese Patent Application No. 2004-340162, filed on November 25, 2004, the content of which is incorporated herein by reference.

### BACKGROUND ART

In recent years, a method for coagulating and precipitating solid contents by adding a polymer coagulant to waste water has been widely adopted.
With regard to sludge generated when waste water is treated, a method for coagulating and dewatering solid contents of the sludge using a polymer coagulant is usually performed.
In these methods, a process of adding a dilute aqueous solution of the polymer coagulant to waste water or sludge is widely adopted.
There are various kinds of polymer coagulants, each having different molecular weight, ionicity, and the like. According to the properties of the sludge to be treated (for example, the solid content concentration, the amount of surface charge of sludge particles, the content of organic components, and the like), an optimum polymer coagulant is selected for use. Polymer coagulants are available in forms of powder, W/O emulsion, or the like, and a powder type polymer coagulant is widely used because it is superior in stability, ease of transportation, and the like as a product.

On the other hand, the properties of the sludge depend on the kind and the treatment method of waste water as a source. Furthermore, it is known that the properties of the sludge change with time due to decomposition or the like. When two or more kinds of sludge are treated at the same time, a problem arises in that the properties of the sludge change according to the mixing ratio of the sludges. For example, as a method for treating municipal waste water, a method of mixing primary sludge and excess sludge and treating the mixture as a mixed raw sludge is usually performed. In this case, the properties of the sludge change greatly if the mixing ratio of the two kinds of sludge changes. Moreover, in the method for coagulating and precipitating waste water, the properties of the waste water change greatly if the mixing ratio of the two kinds of waste water changes.

Therefore, an optimum kind selected from polymer coagulants suitable for treatment and an optimum addition amount thereof are controlled according to variations in the properties of the sludge or waste water. A polymer coagulant is usually stored in a state of an aqueous solution by dissolving a powdery polymer coagulant, and is added in the state of an aqueous solution to the sludge or waste water. Since dissolving the powdery polymer coagulant takes time, it is difficult to control an addition amount of the aqueous solution and it is more difficult to adjust the kind of coagulants.
For example, Patent Document 1 discloses, as a water treatment method including adding an inorganic coagulant to raw water, adding a polymer coagulant to form flocks, and subsequently filtering the flocks, a method including controlling an addition amount of polymer coagulant according to a filtering property of the raw water after forming flocks. This method is considered to be applicable to sludge. However, only the addition amount of polymer coagulant is controlled in this method, and therefore, it is difficult to apply to sludge that has properties which change greatly.

To solve the above problems, various methods have been proposed.
Patent Documents 2 and 3, for example, disclose a method for dewatering sludge using a coagulant including a blend of a cationic coagulant and an amphoteric coagulant. Patent Document 4 discloses a method for dewatering sludge using a coagulant composed of two or more kinds of amphoteric polymers which have different ionic equivalents. These methods have the possibility to be applicable to a broad variety of sludges, compared with methods in which a single coagulant is used.
Patent Document 5 discloses a method including dissolving two kinds of cationic coagulants separately which have different cationic degrees, and adding the cationic coagulant solutions in a ratio so as to be an optimum cationic degree for coagulating of the sludge.

However, in the methods described in Patent Documents 2 to 4, a coagulant provided by blending plural coagulants in a specific ratio is used; therefore, the coagulant cannot efficiently deal with variations in the properties of the sludge. For dealing with such variations in the properties of the sludge, coagulants having various blend ratios are prepared and used according to change, which is not practical.
In the method described in Patent Document 5, since the amount of both coagulants used differs depending on the ratio of the solution used, the retention time of the solution of the coagulant used in a lower amount is prolonged, so a problem arises in that the properties of the coagulants may deteriorate. Since it is difficult to substantially change the ratio of each solution used, the correspondence to variation of properties of the sludge is limited. Furthermore, there is a problem in that the equipment required needs to be large scale; for example, two solution tanks are necessary for dissolving and retaining coagulants, and therefore, it is not practical. Patent Document 1: Japanese Unexamined Patent Application, First Publication No. 2004-025109
Patent Document 2: Japanese Patent Publication No. 2933627
Patent Document 3: Japanese Patent Publication No. 3183809
Patent Document 4: Japanese Unexamined Patent Application, First Publication No. 2002-177706
Patent Document 5: Japanese Unexamined Patent Application, First Publication No. S57-063200

### DISCLOSURE OF INVENTION

### Problems to be Solved by the Invention

The present invention was made in view of the above conditions and its object is to provide a method for coagulating and dewatering sludge, and a method for coagulating and precipitating waste water, which can deal with broad variations in the properties of sludge or waste water and have superior practicability, and in which there is little deterioration of a coagulant.

### Means for Solving the Problems

To solve the above problems, a first aspect of the present invention provides a method for coagulating and dewatering sludge in which an aqueous coagulant solution containing a coagulant is added to sludge, characterized by controlling the addition amounts of at least two kinds of powdery polymer coagulants individually, and preparing the aqueous coagulant solution by mixing the powdery polymer coagulants and water and dissolving the coagulants in water.
A second aspect of the present invention provides a method for coagulating and 5 precipitating waste water in which an aqueous coagulant solution containing a coagulant is added to waste water, characterized by controlling the addition amounts of at least two kinds of powdery polymer coagulants individually, and preparing the aqueous coagulant solution by mixing the powdery polymer coagulants and water and dissolving the coagulants in water.

### EFFECTS OF THE INVENTION

The method for coagulating and dewatering sludge and the method for coagulating and precipitating waste water of the present invention deal with broad variations of the properties of sludge and waste water, and have superior practicability, in which there is little deterioration of a coagulant. When an aqueous coagulant solution containing two or more kinds of coagulants is prepared, at least two kinds of powdery polymer coagulants are used as the coagulants, and the powdery polymer coagulants are added to water while controlling the addition amount thereof individually. As a result, the addition amount and addition ratio of various polymer coagulants in the aqueous coagulant solution can always be maintained at the optimum condition which is most suitable for coagulating and dewatering sludge or coagulating and precipitating waste water. Furthermore, since the polymer coagulants are stored in a powder state and are used by dissolving when using, there is little deterioration of a coagulant, and the methods can quickly deal with a sudden change of sludge or waste water and do not require large-scale equipment, and therefore the methods are highly practical.

### BRIEF DESCRIPTION OF THE DRAWINGS

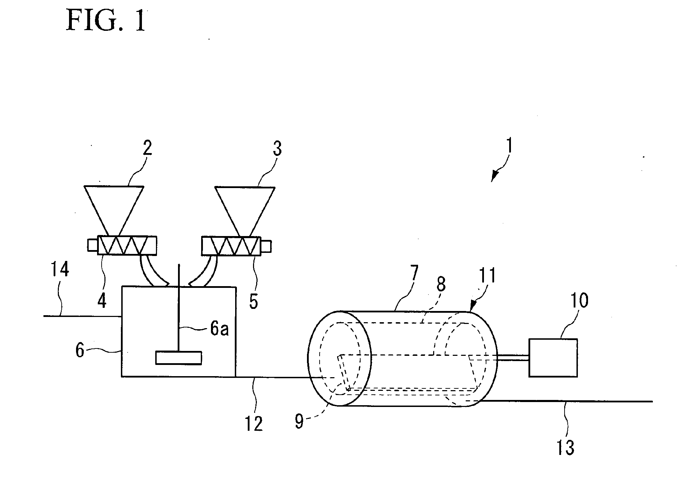

FIG. 1 is a schematic drawing of a continuous dissolving and feeding device which is preferably used in the present invention.

- 1: Continuous dissolving and feeding device
- 2: Hopper
- 3: Hopper
- 4: Feeder
- 5: Feeder
- 6: Mixing tank
- 7: Mantle part
- 8: Filter
- 9: Sliding plate
- 10: Motor
- 11: Filtering device
- 12: Dispersing solution feed line
- 13: Aqueous solution feed line
- 14: Feed water line

### BEST MODE FOR CARRYING OUT THE INVENTION

Hereinafter, the present invention will be explained in detail.
The method for coagulating and dewatering sludge includes adding an aqueous coagulant solution containing a coagulant to sludge.
The method for coagulating and precipitating waste water includes adding an aqueous coagulant solution containing a coagulant to waste water.
These methods may hereinafter be referred to as a "treatment method of the present invention".
The aqueous coagulant solution is prepared by controlling the addition amount of at least two kinds of powdery polymer coagulants, and mixing the powdery polymer coagulants and water to dissolve the coagulants. Preparing an aqueous coagulant solution by controlling the addition amount of at least two kinds of powdery polymer coagulants makes it easily possible to deal with broad variations of the properties of sludge or waste water. As a polymer coagulant, liquid types, emulsion types, and the like as well as powdery polymer coagulants are generally available. Among these, the powdery polymer coagulant has advantages that storage stability is excellent and properties are not easily deteriorated during storage, in comparison with liquid or emulsion type polymer coagulants. Since the powdery polymer coagulant is used after dissolving when using, the time to reach a solution state can be shortened, and therefore, deterioration of the properties of the aqueous coagulant solution can be suppressed. In addition, since the powdery polymer coagulant is a powder, there are advantages in that the cost of transportation becomes low, the storage space required can be reduced.

As a powdery polymer coagulant, any one can be adopted among polymer coagulants which are used for coagulating and dewatering sludge as long as it can be used in a powder state.
The average particle size of the powdery polymer coagulant to be used is not limited. When considering the solubility in water, the average particle size is preferably 50 to 3000µm, more preferably, 100 to 2000µm.

Examples of polymer coagulants include cationic, anionic, nonionic, and amphoteric polymer coagulants, any one of which can be used in the present invention.
Examples of cationic polymer coagulants include acryloyl-based cationic polymer coagulants such as (co)polymers of acryloyloxyethyl trimethyl ammonium chloride, (co)polymers of methacryloyloxyethyl trimethyl ammonium chloride, and (co)polymers of (meth)acryloyloxyethyl benzyl dimethyl ammonium chloride; amidine-based cationic polymer coagulants such as polyamidine; and polyvinylamines.
Examples of anionic polymer coagulants include copolymers of acrylamide and acrylic acid (salt); copolymers of acrylamide and acrylamide-2-methylpropane sulfonic acid (salt); and copolymers of acrylamide, acrylic acid (salt), acrylamide-2-methylpropane sulfonic acid (salt).
Examples of nonionic polymer coagulants include polymers of acrylamide, and the like.
Examples of amphoteric polymer coagulants include ternary or quaternary copolymers of (meth)acryloyloxyethyl trimethyl ammonium chloride/acrylamide/acrylic acid, and the like.

The molecular weight of the polymer coagulants is not limited. There are various polymer coagulants such as high-molecular-weight type polymer coagulants having molecular weight of 10,000,000 or more and lower-molecular-weight type polymer coagulants having a molecular weight of millions, and any one can be adopted in the present invention. When the polymer coagulant is dissolved, a long time is usually required if the molecular weight is high; however, in the present invention, a polymer coagulant having high-molecular-weight can be rapidly dissolved and also undissolved lump do not remain in a solution of the polymer coagulant.

Combinations of two or more kinds of powdery polymer coagulants used in the present invention are not especially limited as long as each powdery polymer coagulant does not have the same properties such as molecular structure, molecular weight, ionicity, and the like.
Specific examples of combinations include a combination of two or more kinds of cationic polymer coagulants; a combination of a cationic polymer coagulant and an amphoteric polymer coagulant; a combination of an anionic polymer coagulant and a cationic polymer coagulant; and an anionic polymer coagulant and an amphoteric polymer coagulant. In addition, a combination of a high-molecular-weight type polymer coagulant and a lower-molecular-weight type polymer coagulant can also be used.
Specific examples of combinations of two or more kinds of cationic polymer coagulants include a combination of a low-cationic-degree and high-molecular-weight type polymer coagulant having a low-cationic-degree and high-molecular-weight and a high-cationic-degree and low-molecular-weight type polymer coagulant having a high-cationic-degree and low-molecular-weight; and a combination of an acryloyl-based cationic polymer coagulant and an amidine-based cationic polymer coagulant.
Specific examples of combinations of a cationic polymer coagulant and an amphoteric polymer coagulant include a combination of the above combination of two or more kinds of cationic polymer coagulants and an amphoteric polymer coagulant; a combination of an amphoteric polymer coagulant and an amidine-based cationic coagulant; and a combination of two or more kinds of amphoteric polymer coagulants having different compositions. The combination of a cationic polymer coagulant and an amphoteric polymer coagulant is not limited to these examples. The third component may be a combination of two or more kinds of coagulants mixed beforehand.

A combination is determined suitably, taking kinds or properties of the sludge or waste water as processing objects into consideration.
If the sludge is an organic sludge containing organic substances, specifically, the combination of two or more kinds of cationic polymer coagulants and the combination of a cationic polymer coagulant and an amphoteric polymer coagulant are preferable.
As a specific example of a combination, for example, a combination of a methacryloyl-based cationic polymer coagulant and an amidine-based cationic polymer coagulant is preferable for dewatering mixed sludge of sewage (mixed sludge of primary sludge and excess sludge) using a belt press dehydration machine. When a mixing ratio of primary sludge is high, the amount of methacryloyl-based cationic polymer coagulant having a large filtration rate and sufficient release property from a filter cloth is increased. When a mixing ratio of excess sludge which is difficult to dewater is high, the amount of amidine-based polymer coagulant having low viscosity of polymer and high cation density is increased. As a result, the filtration property can be sufficiently maintained. Since it is not necessary to use an excess amount of expensive amidine-based coagulants, this combination is economically excellent.

Examples of the properties of the sludge to be considered when combined usually include properties to be considered when a polymer coagulant to be added to sludge is selected, such as, for example, the water content of the sludge, the diameter of flock when coagulated, the filtration rate during dewatering, and the water content of the dewatered sludge.
Examples of properties of waste water to be considered when combined usually include properties to be considered when a polymer coagulant to be added to waste water is selected, such as, for example, the turbidity of waste water, suspended solid content (SS content), and pH.
The addition amount of the powdery polymer coagulant is controlled so that a composition of the aqueous coagulant solution (kinds or mixing ratio of coagulants) is such that it exerts the highest coagulant effect (optimum composition) by observing the above properties.

When an aqueous coagulant solution is prepared, a liquid or emulsion polymer coagulant may be added as well as a powdery polymer coagulant.
Any inorganic coagulant used in a conventional method for coagulating and dewatering sludge or for coagulating and precipitating waste water may be added into the aqueous coagulant solution. Examples of inorganic coagulants include aluminum sulfate; polyaluminum sulfate; ferrous sulfate; ferric chloride; polyferric sulfate, and the like.
When an amphoteric polymer coagulant or an anionic polymer coagulant is used, an acid or the like for controlling pH may be mixed in order to increase solubility.

In the aqueous coagulant solution, a concentration of a polymer coagulant (total of the powdery polymer coagulant and liquid or emulsion polymer coagulant optionally added) is preferably 0.5% by mass or less, more preferably 0.05 to 0.5% by mass. If the concentration of the polymer coagulant is more than 0.5% by mass, viscosity of the solution may be too high and therefore a mixing property of the solution and sludge or waste water may decrease. If the concentration of the polymer coagulant is low, the polymer coagulant will deteriorate easier.

In the present invention, in order to prevent deterioration of properties of the powdery polymer coagulant, the average retention time from the time when the powdery polymer coagulant is dissolved to the time immediately before adding the aqueous coagulant solution to the sludge or waste water is preferably 3 hours or shorter, more preferably 10 seconds or longer and one hour or shorter, and most preferably one minute or longer and 30 minutes or shorter. If the average retention time is longer than 3 hours, the polymer coagulant may further deteriorate. It is considered that deterioration of the polymer coagulant begins from the early stage after dissolving the polymer coagulant.
The term "average retention time" means, when batch dissolution is carried out, an average time between a time until the start of adding the prepared coagulant aqueous solution to the sludge or waste water from the start of dissolving the powdery polymer coagulant and a time until the completion of adding the aqueous coagulant solution from the start of dissolving the powdery polymer coagulant. The powdery polymer coagulant is added to water at an approximately constant speed. When a device for continuous dissolution is used, the average retention time means a retention time in the device which can be calculated by dividing a total hold-up amount of a dissolution device, a supply line, and the like by a flow rate per unit time.
If conventional batch dissolution is carried out, the average retention time can be shortened by decreasing the dissolution amount per batch; however, such an operation is complex.
In order to shorten the dissolution time of the polymer coagulant, it is necessary to make a particle diameter of the powdery polymer coagulant small and to increase the dissolution speed, and also to shorten the average retention time by making a storage tank small after dissolving the polymer coagulant.

In the treatment method of the present invention, it is preferable to use a continuous dissolution supply device for preparation and supply of the aqueous coagulant solution. If the continuous dissolution supply device is used, there are few restrictions as described above; therefore, it is suitable for production on an industrial scale.
The kind of continuous dissolution supply device is not especially limited, but in order to decrease the deterioration of coagulant, a device which can quickly dissolve the powdery polymer coagulant is preferable. Although the device is not limited as long as the powdery polymer coagulant is quickly dissolved, devices disclosed in Japanese Patent Publication No. 3184729, Japanese Patent Publication No. 3184797, and the like are recommended. In these devices, the powdery polymer coagulant is dispersed and swelled in water to provide a swollen gel, and the swollen gel is rubbed through a network filtering member to a fine gel, as a result, the fine gel is dissolved. These devices have an advantage in that there is little degradation of the coagulant.

In the treatment of the present invention, it is preferable that an aqueous coagulant solution be prepared using a device having two or more storage tanks for storing two or more kinds of powdery polymer coagulants individually, a mixing tank equipped with feeders which are capable of controlling the feed rate and are connected to the storage tanks and a feed water pump, and a filtering member, by feeding a powdery polymer coagulant stored in the storage tanks to the mixing tank via the feeders, preparing a dispersed solution by mixing the powdery polymer coagulant and water in the mixing tank, and passing the dispersed solution through the filtering member.

The opening of the filtering member is preferably 10 to 500 µm, and more preferably 50 to 200 µm. If the opening is more than 500 µm, dissolution efficiency of the polymer coagulant decreases, and if the opening is less than 10 µm, filtration of the polymer coagulant takes time and too great a shearing stress needs to be applied to the polymer coagulant when the polymer coagulant is filtered, causing it to deteriorate easily.
A material for the filtering member is not especially limited as long as the material can resist the pressure generated when the dispersed solution passes through the filtering member, however, wire gauzes are usually used. The filtering member may be a monolayer or may be a multilayer, however, in view of its strength, the multilayer is preferred. If the filtering member takes a multilayer form, some materials for the filtering member having the same size openings may be superposed or some materials having different size openings may be superposed to make a multilayer.
The rate at which the dispersing solution is passed through the filtration member (filtration rate) is preferably 1 m³/min or less per 1 m² of a filtration face of the filtration member, though the rate depends on a pressure imparting process. If the filtration rate is 1 m³/min or less per 1 m² of a filtration face of the filtration member, deterioration of the polymer coagulant can be prevented; however, if the filtration rate is more than 1 m³/min per 1 m² of a filtration face, the polymer coagulant can easily to deteriorate.
When the dispersed solution is passed through the filtration member, since flow resistance occurs, pressure can be imparted to the dispersed solution. As a method for imparting pressure, for example, a method of pressing the dispersed solution through a cylindrical filtration member in which a peripheral surface thereof has a reticular structure with a sliding type plate or roller, and the like is listed.

An example of the treatment method of the present invention in which the above-described device is used will be explained with reference to Fig. 1.
A continuous dissolving and feeding device 1 shown in Fig. 1 includes a hopper (storage tank) 2 which stores a powdery polymer coagulant A, and a hopper 3 which stores a powdery polymer coagulant B. The hoppers 2 and 3 are equipped with feeders 4 and 5 which are able to control the feed rate, respectively, and the powdery polymer coagulants A and B in the hoppers 2 and 3 are supplied to a mixing tank 6 while controlling the feed rate.
The feed rate of each of the powdery polymer coagulants can be controlled individually by setting the feed rate with the feeders 4 and 5. The setting of the feed rate may be manually carried out, or may be automatically changed based on a certain physical property value after measuring the certain physical property of the sludge or waste water, or a solution after coagulation treatment.
If the setting of the feed rate is manually carried out, a flock diameter when the sludge is coagulated, the filtration rate during dewatering, the water content of a dehydration cake, and the like, or turbidity, SS (suspended solid), pH, and the like of the waste water are observed, and subsequently the amount of addition of amphoteric coagulant is controlled so as to be an optimum composition for treatment. If the setting of the feed rate is automatically carried out, the above items are automatically measured and the amount of addition of the amphoteric coagulant is controlled based on the results of measurement.

A stirrer 6a is provided in the mixing tank 6. The mixing tank 6 is equipped with a feed water pump (not shown). A dispersing solution containing coagulants is prepared by feeding water to the mixing tank 6 from the feed water pump through a feed water line 14, feeding the powdery polymer coagulants A and B into the water while the addition amount is controlled with the feeders 4 and 5, and swelling the powdery polymer coagulants A and B by stirring and mixing the water and the powdery polymer coagulants A and B together.

The continuous dissolving and feeding device 1 further includes a filtering device 11 containing a cylindrical mantle part 7, a cylindrical filter 8 provided in the mantle part 7, a sliding plate 9 provided in the filter 8, and a motor 10 for sliding the sliding plate 9. The mixing tank 6 and the filtering device 11 are connected via a dispersed solution feed line 12 to feed the dispersed solution into the filter 8 using the dispersed solution feed line 12. The aqueous coagulant solution is obtained by passing the dispersed solution fed as described above through the filter 8.
Though the undissolved coagulant in the dispersing solution does not pass through the filter 8, if the sliding plate 9 is slid, the dispersing solution is pressed to the filter 8 and the undissolved coagulant and water are efficiently mixed. As a result, the coagulant swells, and therefore, the coagulant can be quickly dissolved. Conventionally, dissolving the powdery polymer coagulant took time; therefore, deterioration of the aqueous coagulant solution was substantial. By using the above device 1, the powdery polymer coagulants are quickly dissolved, thus decreasing deterioration of the aqueous coagulant solution.

Furthermore, in the continuous dissolving and feeding device 1, an aqueous solution feed line 13 connects the mantle part 7 of the filtering device 11 and the filter 8, and the aqueous solution feed line 13 is equipped with a pump (not shown) for continuously feeding the obtained coagulant aqueous solution into a coagulating tank for the sludge or waste water.
According to the above continuous dissolving and feeding device, deterioration of coagulants can be prevented and also large scale sludge treatment or waste water treatment can be carried out.

The aqueous coagulant solution obtained as described above is added to the sludge or waste water and they are mixed. As a result, the solid content of the sludge or waste water can be coagulated. The coagulated sludge is dewatered with a dehydrator or the like. The waste water in which the solid content is coagulated and precipitated is separated from the solid content by gravity.
The types of dehydrator used for dewatering the sludge are not especially limited, and examples of dehydrators include a press dehydrator, a centrifugal dehydrator, a multi-disk dehydrator, and the like.

Sludge and waste water to be subjected to the treatment method of the present invention are not especially limited. Since the treatment method of the present invention can deal with broad variations in the properties of the sludge or waste water, when the method is applied to, for example, a mixed raw sludge in which the mixing ratio of primary sludge and excess sludge changes, sludge in which the degree of decomposition of the sludge changes depending on the time of extraction in a relatively small scale treatment plant in which sludge is intermittently extracted, sludge in which the degree of decomposition changes according to the seasons, sludge generated by treating waste water in which the concentration thereof changes greatly due to inflow of rainwater, waste water in which pH thereof changes, and the like, effects of the present invention are remarkably shown.

In the above continuous dissolving and feeding device 1, there are two storage tanks and two feeders; however, the number of tanks or feeders is not limited and three or more storage tanks and feeders may be provided.
The continuous dissolving and feeding device 1 is equipped with a number of storage tanks and feeders according to the kind of the powdery polymer coagulant, a mixing tank 6, and a filtering device 11; however, a plurality of mixing tanks 6 and filtering devices 11 may be provided if necessary. To realize space-saving, a device equipped with a number of storage tanks and feeders according to the kind of powdery polymer coagulant to be used, a mixing tank 6, and a filtering device 11 is preferably used.
In the present invention, if space or the like is not limited, two or more continuous dissolving and feeding devices as described above may be used to prepare coagulant aqueous solutions individually and thereafter to line-mix the aqueous coagulant solutions. A plurality of devices in which the above continuous dissolving and feeding device and single or plural coagulants are flexibly mixed and dissolved are used to line-mix more kinds of coagulant aqueous solutions.

### Examples

Hereinafter, the present invention will be explained in detail using examples; however, the examples are not intended to limit the scope of the present invention.

### (Example 1)

Sludge generated in A treatment plant (oxidation ditch) was treated using a continuous dissolving and feeding device 1 as shown in Fig. 1. As a filter 8, a mesh plate (opening: 100 µm) was used.
KP7000 manufactured by Dia-Nitrix Co., Ltd. (powdery cationic polymer coagulant (polyamidine-based); cationic equivalent: 6meq/g; molecular weight: 3,000,000) as a coagulant A, and a powdery amphoteric polymer coagulant (copolymer of acryloyloxyethyl trimethylammonium chloride / acrylamide / acrylic acid = 27.0 / 44.0 / 29.0 (mol%); molecular weight: 4,000,000) as a coagulant B were provided in a hopper 2 of the continuous dissolving and feeding device 1, and the following operation was carried out.
September 24: A powdery polymer coagulant having a blend ratio of 75/25 (% by mass) = coagulant A/coagulant B was dissolved in water to prepare 0.2% by mass of an aqueous coagulant solution, the aqueous coagulant solution was added to sludge in an addition amount of 200mg/L to liquid, and the sludge was dewatered using a dehydrator. The dewatering capacity was the most satisfactory when the operation started and the water content of the dewatered sludge was 83.9%.
When a few days had passed while maintaining the same operating condition, since the water content of the sludge increased to 85.6% (that is, the dewatering capacity decreased), the blend ratio was controlled to 50/50 (% by mass) while maintaining the same concentration. As a result, the water content of the sludge decreased to 84%.
On November 12, since an increase of the water content was observed again, the blend ratio was controlled to 60/40 (% by mass) while maintaining the same concentration, and the blend ratio was changed from 60/40 to 70/30 by November 15 while maintaining the same concentration. During this period, the water content of the sludge was 83.2%.
When the blend ratio was controlled as described above from September 24 to November 15, the average water content of the treated sludge was 84.5%.
In the above treatment, the aqueous coagulant solution was used within 3 hours after dissolving the powdery polymer coagulant into water.

### (Comparative example 1)

In the A treatment plant, sludge was treated for a month starting from November 17, using the same device and coagulants as described in Example 1 and also the aqueous coagulant solution (concentration: 200mg/L) having the blend ratio of coagulant A/coagulant B = 50/50 (% by mass) without changing the blend ratio. As a result, the water content of the sludge treated for a month starting from November 17 changed between 84.2 and 88.2%, and the average water content was 86.1%.

### (Example 2)

Sludge treatment was carried out in B treatment plant (oxidation ditch) for ten days, using the same device as described in Example 1, and using KP7000 manufactured by Dia-Nitrix Co., Ltd. as a coagulant A, and a powdery amphoteric polymer coagulant (copolymer: methacryloyloxyethyl trimethylammonium chloride / acrylamide / acrylic acid = 18.6/71.3/10.1 (mol%); molecular weight: 4,000,000) as a coagulant B. The sludge treatment was carried out by sequentially changing the blend ratio of coagulant A/coagulant B from 60/40 to 70/30 to achieve the lowest water content of a dehydration cake. As a result, the average water content of the sludge treated for ten days was 81 %.

### (Comparative Example 2)

In the B treatment plant, sludge was treated during five days, using the same device and coagulants as described in Example 2 and also the 0.2% coagulant aqueous solution (concentration: 200mg/L) having the blend ratio of coagulant A/coagulant B = 60/40 (% by mass) without changing the blend ratio. As a result, the average water content of sludge treated during five days was 82.8%.

### (Example 3)

Sludge treatment was carried out in C treatment plant (mixed raw sludge) using the same device as described in Example 1, and using KP201 G manufactured by Dia-Nitrix Co., Ltd. (powdery cationic polymer coagulant, methacryloyloxyethyl trimethylammonium chloride 100%) as a coagulant A, and KP7000 manufactured by Dia-Nitrix Co., Ltd. as a coagulant B.
Regarding the mixed raw sludge having a composition of primary sludge/excess sludge = 60/40 (mass ratio), when the sludge treatment was carried out using coagulant A/coagulant B = 100/0, the best result was obtained and the average water content was 78.4%.
Regarding the mixed raw sludge having a composition of primary sludge/excess sludge = 20/80 (mass ratio), when the sludge treatment was carried out using coagulant A/coagulant B = 75/25 (mass ratio), the best result was obtained and the average water content was 79.1 %.

### (Comparative Example 3)

Except for using only coagulant A, sludge treatment was carried out under the same condition as described in Example 3. The average water content was 82%.

As shown in the above results, in Examples 1 to 3 in which the addition amount of powdery polymer coagulants was controlled according to the change of composition such as primary sludge/excess sludge to change the blend ratio, since each sludge had a low water content, dewatering efficiency of the sludge was high.

### (Example 4)

Sludge in waste water of D paper plant in which the SS content in the sludge was 2.5% and the ratio of fiber content in the SS content of sludge fluctuated within 10 to 35% was treated according to the following processes.
Using the same device as described in Example 1, a polymer coagulant was added to the sludge, the mixture of polymer coagulant and sludge was mixed, and thereafter the mixture was dewatered for five days using a screw press dehydrator. The polymer coagulant was prepared by mixing a powdery cationic polymer coagulant (acryloyloxyethyl trimethylammonium chloride / acrylamide = 30/70 (mol%); molecular weight: 5,000,000) as a coagulant A and a powdery amphoteric polymer coagulant (copolymer of acryloyloxyethyl trimethylammonium chloride / acrylamide / sodium acrylate = 25.0 / 50.0 / 25.0 (mol%); molecular weight: 4,000,000) as a coagulant B in the following mixing ratio so as to enable the optimum treatment according to the ratio of fiber content in the SS content of the sludge, and dissolving the mixture in water so as to be 0.2% by mass of the solid content concentration. As a result, conditions whereby the addition amount of the polymer coagulant was 60 ppm, the water content of the cake after dehydration was 65% or less, and the state that the SS content did not leak from the dehydrator was maintained for five days.
When fiber content/SS content was 10% or more and less than 25%: coagulant
A/coagulant B = 70/30 (mass ratio)
When fiber content/SS content was 25% or more and 35% or less: coagulant A/coagulant B = 95/5 (mass ratio)

### (Comparative Example 4)

The same sludge as described in Example 4 was dewatered using only coagulant A or a mixture of the fixed blend ratio of coagulant A/coagulant B = 70/30 (mass ratio) as a polymer coagulant. However, stable dehydration was not maintained as described below.

### [Example of using only coagulant A as polymer coagulant]

When the fiber content/SS content in sludge was 25% or more and 35% or less, the addition amount of the polymer coagulant was 60 ppm, so the dewatering property was satisfactory; however, when the fiber content/SS content in the sludge was 10% or more and less than 25%, the SS content outflowed from the dehydrator in the range of 40 to 100 ppm of the addition amount of polymer coagulant.

### [Example of using coagulant A/coagulant B = 70/30 as polymer coagulant]

When the fiber content/SS content in sludge was 10% or more and less than 25%, the addition amount of the polymer coagulant was 60 ppm, so the dewatering property was satisfactory; however, when the fiber content/SS content in the sludge was 25% or more and 35% or less, the water content of the cake was not maintained at 65% or less unless the addition amount of the polymer coagulant was increased to 90 ppm.

### (Example 5)

Treatment of waste water, in which pH thereof before adding a polymer coagulant fluctuated from 5.7 to 7.2, having the following characteristics was carried out according to the following processes in a paper plant.

| [Characteristics of waste water] | |
|---|---|
| SS content: | 1,400 to 1,500 ppm |
| Addition amount of aluminum sulfate: | 70 ppm |
| pH fluctuation: | 5.7 to 7.2 |

Using the same device as described in Example 1, a polymer coagulant was added to the waste water so as to be 0.6 ppm in concentration, the mixture of the polymer coagulant and waste water was mixed, and thereafter the mixture was coagulated and precipitated. The polymer coagulant was prepared by mixing a powdery low-anionic polymer coagulant (acrylamide / sodium acrylate = 95.0/5.0 (mol%); molecular weight: 10,000,000) as a coagulant A and a powdery midium-anionic polymer coagulant (acrylamide / sodium acrylate = 88.0/12.0 (mol%); molecular weight: 10,000,000) as a coagulant B in the following mixing ratio according to pH of the waste water, and dissolving the mixture in water so as to be 0.1 % by mass of the solid content concentration.
When pH of waste water was 5.7 to 6.1: coagulant A/coagulant B = 90/10 (mass ratio)
When pH of waste water was 6.2 to 6.6: coagulant A/coagulant B = 50/50 (mass ratio)
When pH of waste water was 6.7 to 7.2: coagulant A/coagulant B = 10/90 (mass ratio)
As a result, stable coagulating and precipitation treatment was maintained. For example, when some of the waste water immediately after mixing was extracted, the sedimentation time of flocks (time until sedimentation of flocks was no longer observed) was measured using ajar tester (product name: jar tester MJS-4P, manufactured by Kabushiki Kaisya Miyamoto Seisakusyo), and thereafter the turbidity of the supernatant of the waster water after measuring the sedimentation time (after coagulating and precipitating) was measured using a turbidity meter (product name: turbidity meter 2100N, manufactured by Central Kagaku Corp.), the sedimentation time was within 30 seconds and the turbidity was 50 NTU or less.

### (Comparative Example 5)

The coagulant A or coagulant B singly, or a blend of coagulant A/coagulant B = 50/50 (mass ratio), which was a fixed blend ratio, was added as a polymer coagulant to the waste water, which was the same as that described in Example 5, and the mixture was coagulated and precipitated. As a result, the following problems were generated.
When the coagulant A was added singly, in the waste water having pH 6.2 or more, the turbidity of the supernatant of the waste water after coagulating and precipitating was substantial. For example, if the waste water having pH 7.2 was used, the sedimentation time was within 30 seconds and the turbidity was 110 NTU.
When the coagulant B was added singly, in the waste water having pH 6.6 or less, the sedimentation time of flocks was long. For example, if the waste water having pH 5.7 was used, the sedimentation time was 60 seconds and the turbidity was 50 NTU or less.
When the blend of coagulant A/coagulant B = 50/50 was added, the sedimentation time of flocks in the range of pH 5.7 to 6.1 was long. For example, waste water having pH 5.7 was used, the sedimentation time was 47 seconds and the turbidity was 50 NTU or less. In the range of pH 6.7 to 7.2, the turbidity of the supernatant of the waste water after coagulating and precipitating was substantial. For example, if the waste water having pH 7.2 was used, the sedimentation time was within 30 seconds and the turbidity was 80 NTU.

### INDUSTRIAL APPLICABILITY

The method for coagulating and dewatering sludge and the method for coagulating and precipitating waste water according to the present invention are able to deal with broad variations of the properties of the sludge or waste water, and have superior practicability, in which there is little deterioration of a coagulant.
When an aqueous coagulant solution containing two or more kinds of coagulants is prepared, at least two kinds of powdery polymer coagulants are used as the coagulants, and the powdery polymer coagulants are added to water while controlling the addition amount thereof individually. As a result, the addition amount and addition ratio of various polymer coagulants in the aqueous coagulant solution can always be maintained at the optimum condition which is most suitable for coagulating and dewatering the sludge or coagulating and precipitating waste water. Furthermore, since the polymer coagulants are stored in a powder state and are used by dissolving when using, there is little deterioration of a coagulant, and the methods can quickly deal with a sudden change of sludge or waste water and do not require large-scale equipment, and therefore the methods are highly practical.

## Claims

1. A method for coagulating and dewatering sludge in which an aqueous coagulant solution containing a coagulant is added to the sludge, comprising:
controlling addition amounts of at least two kinds of powdery polymer coagulants individually; and
preparing the aqueous coagulant solution by mixing the powdery polymer coagulants and water and dissolving the coagulants in water.

2. The method for coagulating and dewatering sludge according to claim 1, further comprising:
using a continuous dissolving and feeding device equipped with two or more storage tanks for storing two or more kinds of powdery polymer coagulants individually, feeders which are able to control feed rate, connected to the storage tanks, a mixing tank equipped with a feed water pump, and a filtering member;
feeding the powdery polymer coagulants stored in the storage tanks to the mixing tank via the feeders;
preparing a dispersed solution by mixing the powdery polymer coagulants with water in the mixing tank; and
passing the dispersed solution through the filtering member to prepare the aqueous coagulant solution.

3. The method for coagulating and dewatering sludge according to claim 1 or 2, wherein addition amounts of the at least two kinds of powdery polymer coagulants are controlled according to properties of the sludge.

4. The method for coagulating and dewatering sludge according to any one of claims 1 to 3, wherein an average retention time from a time when the powdery polymer coagulant is dissolved to a time immediately before adding the aqueous coagulant solution to the sludge is within 3 hours.

5. A method for coagulating and precipitating waste water in which an aqueous coagulant solution containing a coagulant is added to the waste water, comprising:
controlling addition amounts of at least two kinds of powdery polymer coagulants individually; and
preparing the aqueous coagulant solution by mixing the powdery polymer coagulants and water and dissolving the coagulants in water.

6. The method for coagulating and dewatering waste water according to claim 5, further comprising:
using a continuous dissolving and feeding device equipped with two or more storage tanks for storing two or more kinds of powdery polymer coagulants individually, feeders which are able to control feed rate, connected to the storage tanks, a mixing tank equipped with a feed water pump, and a filtering member;
feeding the powdery polymer coagulants stored in the storage tanks to the mixing tank via the feeders;
preparing a dispersed solution by mixing the powdery polymer coagulants with water in the mixing tank; and
passing the dispersed solution through the filtering member to prepare the aqueous coagulant solution.

7. The method for coagulating and dewatering waste water according to claim 5 or 6, wherein addition amounts of the at least two kinds of powdery polymer coagulants are controlled according to properties of the waste water.

8. The method for coagulating and dewatering waste water according to any one of claims 5 to 7, wherein an average retention time from a time when the powdery polymer coagulant is dissolved to a time immediately before adding the aqueous coagulant solution to the waste water is within 3 hours.
